# EUROPÄISCHE PATENTSCHRIFT

(11) **EP 0 834 583 B1**
(45) Veröffentlichungstag und Bekanntmachung des Hinweises auf die Patenterteilung: **07.02.2001**
(21) Anmeldenummer: 97117032.9
(22) Anmeldetag: 30.09.1997
(51) Int. Cl.: C22B 19/20, C25C 1/18, C22B 19/28, C22B 7/00

(54) **Hydrometallurgisches Verfahren zur Gewinnung von Zink und anderen Wertmetallen aus Chlor oder Fluor enthaltenden Rohstoffen wie Waelz-oxiden**
Wet process for the entraction of zinc and other metal values form chlorine and fluorine bearing raw materials such as Waelz oxides
Procédé hydrométallurgique pour récupérer le zinc et autres métaux de valeur à partir de matériaux contaminés par le chlore et le fluor tels ques des oxydes Waelz

(30) Priorität: 04.10.1996 DE 19640869
(43) Veröffentlichungstag der Anmeldung: 08.04.1998
(73) Patentinhaber: RUHR-ZINK GMBH, 45702 Datteln (DE)
(72) Erfinder: Smykalla, Günter, 45728 Haltern (DE); Schulze, Jürgen, 45711 Datteln (DE); Püllenberg, Reinhard, Dr., 45711 Datteln (DE)
(74) Vertreter: Lenzing, Andreas, Dr.

(56) Entgegenhaltungen:
- EP-A- 0 066 024
- EP-A- 0 420 525
- WO-A-96/32512
- CA-A- 1 200 701
- G. THORSEN ET AL.: "Recovery of zinc from zinc ash and flue dusts by hydrometallurgical processing" JOURNAL OF METALS, Bd. 33, Nr. 1, Januar 1981, WARRENDALE, PA, USA, Seiten 24-29, XP002051570
- I. NIRDOSH ET AL.: "Bench scale investigations on the electrolytic recovery of zinc powder from galvaniser's ash" HYDROMETALLURGY, Bd. 20, Nr. 2, Mai 1988, AMSTERDAM, NL, Seiten 203-217, XP002051571
- M.A. RABAH & A.S. EL-SAYED: "Recovery of zinc and some of its valuable salts from secondary sources and wastes" HYDROMETALLURGY, Bd. 37, Nr. 1, Januar 1995, AMSTERDAM, NL, Seiten 23-32, XP000491391

## Beschreibung

Die Erfindung betrifft ein Verfahren zur Gewinnung von Wertmetallen, insbesondere von Zink aus halogenidhaltigen Rohstoffen, insbesondere aus Wälzoxiden.

Der Rohstoff der meisten durch Elektrolyse Zink erzeugenden Anlagen besteht aus schwefelhaltigen Konzentraten. Die erste Verfahrensstufe ist üblicherweise ein Röstprozeß, bei dem Schwefel als Schwefeldioxid entfernt und Zink in ein säurelösliches Oxid (Röstgut) übergeführt wird. Das Zinkoxid wird in einer Schwefelsäurelösung gelaugt. Die erhaltene Zinksulfatlösung wird hydrometallurgisch gereinigt und das Zink durch Elektrolyse ausgefällt. Das zur Schwefelsäure (Zellensäure) regenerierte Sulfat wird in die Oxidlaugungsstufe rezirkuliert.

Chloride und Fluoride der Konzentrate werden beim Röstprozeß entfernt und gelangen somit nicht in den geschlossenen Lösungskreislauf des Laugungs- und Elektrolyseprozeßes. Der Chlor- und Fluorgehalt im Röstgut liegt bei < 50 ppm.

Außer den schwefelhaltigen Zinkkonzentraten gibt es Rohstoffe, beispielsweise Wälzoxide, die ohne Röstung für die elektrolytische Zinkgewinnung eingesetzt werden können. In diesen ist das Zink als Carbonat, Silikat oder Oxid gebunden und somit säurelöslich.

Bei der Verarbeitung von Sekundärrohstoffen wie Kupferschrott und anderen Kupfersekundärmaterialien im Schachtofen, Stahlwerksstäuben im Wälzofen sowie weiteren Reststoffen, fallen chlorid- und fluoridhaltige Flugstäube unterschiedlicher Zusammensetzung an, die neben den Hauptbestandteilen Zink und Blei auch Kupfer, Zinn und andere Beimengungen enthalten. Eine typische Zusammensetzung dieser Ausgangsstoffe sieht wie folgt aus:

| Zn | Fe | Pb | SiO₂ | Al₂0₃ | Cl | F | Na | K | CaO | Sn |
|---|---|---|---|---|---|---|---|---|---|---|
| 64% | 0,5% | 7% | 0,5% | 0,5% | 5% | 0,2% | 1,5% | 2,9% | 1,2% | 0,3% |

Ihr direkter Einsatz als Rohstoff für die elektrolytische Zink-gewinnung wird insbesondere durch den hohen Chlorid- und Fluoridgehalt verhindert.

Eine Anreicherung dieser Elemente in der Prozeßlauge verursacht Korrosion an den Elektroden der Zinkelektrolyse und klebendes Kathodenzink. Die zulässigen Fluorgehalte im Zinkelektrolyt liegen bei 5-10 mg/l. über 20 mg/l müssen besondere Behandlungen, wie Aufrauhen der Aluminiumabscheidefläche durch Schleifen, durchgeführt werden. Über 30 mg/l wird klebendes Zink abgeschieden. Es haftet dann so fest, daß ein manuelles Abziehen oder eine mechanische Abtrennung mit Strippmaschinen nicht oder nur teilweise durchgeführt werden kann.

Ist ein Abziehen des Elektrolytzinks nicht möglich, so werden die Kathoden in sog. Auflösungsbäder zur Rücklösung des bereits abgeschiedenen Zinks eingesetzt. Die Wiederauflösung des Zinks vermindert die Stromausbeute bzw. erhöht den spezifischen Energieaufwand.

Engpässe durch den hierbei verursachten Arbeitsaufwand lassen sich in Betrieben, in denen manuell gestrippt wird, teilweise durch erhöhten Personaleinsatz überwinden. Mit der zunehmenden, Arbeitskräfte sparenden Mechanisierung der Bäderhallen sowie der Umstellung der Betriebe auf Strippmaschinen stehen vielfach zu wenig Arbeitskräfte zur Verfügung, um diese Schwierigkeiten rasch beheben zu können. Voraussetzung für einen störungsfreien Betriebsablauf ist daher eine geringe gleichmäßige Haftung des Zinks auf den Aluminiumkathoden.

Die Entfernung von Halogeniden aus dem Elektrolysekreislauf ist äußerst schwierig und nicht wirtschaftlich. So wird z.B. bei der Neutralisation der schwach sauren Zinksulfatlösung mit Röstgut und der dabei stattfindenden Fe⁺³- Hydrolyse wird etwas Fluor gefällt oder absorbiert. Chlorid wird nicht gefällt. Die Fluorfällung erfolgt wahrscheinlich durch CaO-Gehalte im Röstgut.

Durch Laugen mit Soda bei 90°C und Waschen mit Wasser werden Chlor und Fluor auf Restgehalte von nur > 0.1% herabgesetzt. Zur Herstellung einer elektrolysetauglichen Zinksulfatlösung muß der Chlorid- und Fluoridgehalt im Wälzoxid jedoch bis auf < 0.05% entfernt werden.

Aus der EP 0066024 ist ein Verfahren zur Entfernung von Mangan- und Chloridionen aus wäßrigen, sauren Zinksulfatlösungen bekannt, bei dem das Chlor durch Ozonbehandlung in die flüssige Phase oder eine gasförmige Phase überführt wird. Dieses Verfahren wird vorzugsweise bei Temperaturen von 20 °C bis 60 °C durchgeführt.

Aus der Zeitschrift "Hydrometallurgy 20" (1988), Seite 203 - 217, ist bekannt, daß ein etwa 10 %-iger Anteil des in zinkhaltigen Rohstoffen enthaltenen Chlors schwer löslich ist. Dieser Anteil wird als leichtlöslich in heißer verdünnter alkalischer Lauge, nämlich Natronlauge, bezeichnet. Ein Temperaturbereich hierfür ist nicht angegeben.

Die EP 0420525 zeigt ein Verfahren zur Beseitigung von Chlor aus entsprechenden zinkhaltigen Rohstoffen durch Waschen mit Natriumcarbonatlösung bei 90 °C. Hierbei wird das Chlor bis auf einen Restgehalt von 1% herausgewaschen. In der Praxis ist diese Reduktion nicht ausreichend. Der Restgehalt ist auch bei diesem Verfahren stark abhängig von der Art und der Herkunft der Rohstoffe.

Schließlich ist aus der CA-A-1200701 ein Verfahren zur Entfernung von Fluor und Chlor aus blei- und zinkoxydhaltigen Rohstoffen, insbesondere Ofenstäuben bekannt, bei dem Natriumcarbonat und Wasser zum Waschen der Rohstoffe verwendet werden. Es wird gefunden, daß Chlor- und Fluorrestgehalte von etwa 0,03% bereits nach etwa 1 Stunde Behandlungszeit erreicht werden. Danach reduzieren sich die Halogenidgehalte nicht mehr signifikant. Es wird außerdem beschrieben, daß eine längere Behandlungszeit und erhöhte Behandlungstemperaturen keine wesentliche weitere Reduktion des Halogenidanteils erbringen.

Aus allen Versuchen zeigt sich in der Praxis, daß es einen schwer löslichen Anteil an Halogeniden in den hier in Rede stehenden Rohstoffen gibt, die auch bei höherer Konzentration, längerer Behandlungsdauer und erhöhten Temperaturen von bis zu 90 °C nicht löslich sind.

Der Erfindung liegt deshalb die Aufgabe zugrunde, ein geeignetes Verfahren zur Gewinnung von Zink und anderen Wertmetallen aus chlor- und fluorhaltigen Rohstoffen bereitzustellen, bei dem die durch Chlorid und Fluorid hervorgerufenen Störungen insbesondere bei der Metallelektrolyse vermieden werden.

Diese Aufgabe wird von einem Verfahren mit den Merkmalen des Anspruchs 1 gelöst.

Weil zur Gewinnung von Zink und anderen Wertmetallen aus halogenidhaltigen Rohstoffen zunächst das Mischen der Rohstoffe mit einer als Hauptbestandteil Wasser enthaltenden Flüssigkeit, die Zugabe von Natriumcarbonat, z.B. Soda, dann das Erhitzen der Mischung auf eine Temperatur von mehr als 100° C, das Auswaschen wenigstens eines Teils der Halogenide mit Wasser, das Behandeln der halogenidarmen Rohstoffe zur Lösung zumindest eines Teils der Metalle in Schwefelsäure oder Zellensäure, und schließlich das Abscheiden zumindest eines Teils der in der Lösung enthaltenen Metalle durch Elektrolyse erfolgt, werden die Restgehalte an Halogeniden, insbesondere auch einer schwer löslichen Fraktion von Chloriden und Fluoriden auf weniger als 0.05 % herabgesetzt. Die Elektrolyse wird durch diese Restgehalte nicht wesentlich beeinträchtigt.

Dabei ist vorteilhaft, wenn die Rohstoffe Wälzoxide enthalten. Dieser Rohstoff enthält nahezu keine Sulfide, so daß ein Röstvorgang entfallen kann. Eine bevorzugte Ausgestaltung des vorliegenden Verfahrens beruht deshalb darauf, daß die Rohstoffe zumindest zum Teil ohne vorhergehende Röstung dem Verfahren zugeführt werden.

Dabei ist für den Verfahrensablauf von Vorteil, wenn Erhitzen bis auf eine Endtemperatur von mehr als 110° C, vorzugsweise 120 - 130° C, insbesondere auf 125°C erfolgt.

Der apparative Aufwand kann gering gehalten werden, wenn das Erhitzen in einem ersten Schritt bis auf etwa 90°C bei Atmosphärendurck und in einem zweiten Schritt bis zur gewählten Endtemperatur mit erhöhtem Druck in einem Autoklaven erfolgt. So kann mit einem relativ kleinen Autoklaven ein hoher Durchsatz erreicht werden, weil der Autoklav nicht für den gesamten Zeitraum der Erhitzung mit der jeweiligen Charge besetzt ist, sondern eine Vorerwärmung außerhalb vorgesehen ist.

### Betriebsbeispiel

Die Wälzoxide mit ca. 20 % Restfeuchte werden per LKW angeliefert und auf einer dafür eingerichteten Lagerfläche abgekippt. In unmittelbarer Nähe ist ein 10 m3 fassender Anmaischtank mit Rührorgan aufgestellt. Mittels Schaufellader wird das staubfreie Oxid in den Anmaischtank gegeben und mit Warmwasser auf ein Litergewicht von 1.7 kg angemaischt. Dabei werden bereits 25 - 50 kg Soda pro 1 t Wälzoxid zugesetzt.

Die Wälzoxidmaische wird in einem 145 m³ fassenden Aufheiztank mit Wasser auf ein Litergewicht von 1.35 kg eingestellt und mit Direktdampf auf 90° C aufgeheizt. Mit 10-15 m³/h wird die Suspension in einen 25 m³ fassenden Autoklav gepumpt. Bei 120° C und pH 9-10 wird der alkalische Chlorid- und Fluoridaufschluß durchgeführt.

Auf einer Kammerfilterpresse mit 232 m² Filterfläche wird das Cl/F-haltige Filtrat abgetrennt und mit folgender Zusammensetzung zur Abwasseranlage abgegeben:
pH = 10.3, Cl = 638 mg/l, F = 374 mg/l, Na = 1.7 g/l.

Der Feststoff wird dann mit 15 m³ Wasser in der Presse gewaschen. Der gewaschene Filterkuchen mit 0.03 % F und 0.01 % Cl wird zur Herstellung von Zinksulfatlösung eingesetzt.

## Patentansprüche

1. Verfahren zur Gewinnung von Zink und gegebenenfalls anderen Nichteisenmetallen aus halogenidhaltigen Rohstoffen, mit folgenden Verfahrensschritten:
Mischen der Rohstoffe mit einer Wasser enthaltenden Flüssigkeit;
Zugabe wenigstens eines Neutralisierungsmittels ausgewählt aus einer basischen Alkali- oder Erdalkalimetallverbindung zu der Mischung;
Erhitzen der Mischung auf eine Temperatur von mehr als 100°C;
Abtrennen des halogenidhaltigen Filtrats;
Auswaschen des verbleibenden Feststoffs mit Wasser;
Behandeln des ausgewaschenen halogenidarmen Feststoffs zur Lösung zumindest eines Teils des Zinks und der anderen Metalle in Schwefelsäure oder Zellensäure, und
Abscheiden zumindest eines Teils des in der Lösung enthaltene Zinkmetalls und der in der Lösung enthaltenen anderen Metalle durch Elektrolyse.

2. Verfahren nach Anspruch 1, **dadurch gekennzeichnet ,** daß die Rohstoffe Wälzoxide enthalten.

3. Verfahren nach einem der vorherigen Ansprüche,
**dadurch gekennzeichnet,** daß die Rohstoffe zumindest zum Teil ohne vorhergehende Röstung dem Verfahren zugeführt werden.

4. Verfahren nach einem der vorherigen Ansprüche,
**dadurch gekennzeichnet,** daß der Mischung vor dem Erhitzen wenigstens ein Natriumcarbonat ausgewählt aus Natriumcarbonat, Natriumsequicarbonat und Natriumbicarbonat und deren Hydraten, insbesondere Natriumcarbonat zugefügt wird.

5. Verfahren nach einem der vorherigen Ansprüche,
**dadurch gekennzeichnet,** daß das Erhitzen bis auf eine Endtemperatur von mehr als 110° C, vorzugsweise 120 - 130° C erfolgt.

6. Verfahren nach einem der vorherigen Ansprüche,
**dadurch gekennzeichnet,** daß das Erhitzen in einem ersten Schritt bis auf etwa 90°C bei Atmosphärendurck und in einem zweiten Schritt bis zur gewählten Endtemperatur mit erhöhtem Druck in einem Autoklaven erfolgt.

## Claims

1. A process for extracting zinc and, where appropriate, other non-ferrous metals from halide-containing raw materials, comprising the following process steps:
mixing the raw materials with a liquid containing water as main constituent;
adding to the mixture at least one neutralising agent selected from a basic alkali-metal or alkaline-earthmetal compound;
heating the mixture to a temperature of more than 100°C;
burning off the halide-containing filtrate;
washing out the remaining solid matter with water;
treating the washed-out, low-halide solid matter with a view to dissolving at least some of the zinc and the other metals in sulfuric acid or cell acid, and
separating by electrolysis at least some of the zinc metal contained in the solution and the other metals contained in the solution.

2. A process according to Claim 1, **characterised in that** the raw materials contain Waelz oxides.

3. A process according to one of the preceding claims, **characterised in that** the raw materials are supplied to the process, at least in part, without prior roasting.

4. A process according to one of the preceding claims, **characterised in that** at least one sodium carbonate selected from sodium carbonate, sodium sesquicarbonate and sodium bicarbonate and the hydrates thereof, in particular sodium carbonate, is added to the mixture prior to heating.

5. A process according to one of the preceding claims, **characterised in that** heating is effected to a final temperature of more than 110° C, preferably 120 - 130° C.

6. A process according to one of the preceding claims, **characterised in that** heating is effected in a first step to approximately 90°C at atmospheric pressure and in a second step to the chosen final temperature with increased pressure in an autoclave.

## Revendications

1. Procédé pour la récupération de zinc et éventuellement d'autres métaux non ferreux à partir de matières brutes contenant des halogénures avec les étapes suivantes de procédé :
le mélange des matières brutes avec un liquide contenant comme constituant principal de l'eau ;
l'addition au mélange d'au moins un agent de neutralisation choisi parmi un composé basique de métal alcalin ou de métal alcalino-terreux;
le chauffage du mélange jusqu'à une température supérieure à 100°C;
la séparation du produit de filtration contenant des halogénures;
le lavage de la matière solide résiduelle avec de l'eau;
le traitement de la matière solide obtenue par lavage pauvre, en halogénure pour une dissolution d'au moins une partie de l'étain et des autres métaux dans de l'acide sulfurique ou de l'acide cellulosique, et
la séparation d'au moins une partie du métal de zinc contenu dans la solution et des autres métaux contenus dans la solution par électrolyse.

2. Procédé selon la revendication 1, caractérisé en ce que les matières brutes. contiennent des oxydes de laminage.

3. Procédé selon l'une quelconque des revendications précédentes, caractérisé en ce que l'on introduit les matières brutes au moins en partie sans grillage préliminaire dans le procédé.

4. Procédé selon l'une quelconque des revendications précédentes caractérisé en ce que l'on ajoute au mélange avant le chauffage au moins un carbonate de sodium choisi parmi le carbonate de sodium, le sesquicarbonate de sodium et le bicarbonate de sodium et des hydrats de ceux-ci, en particulier le carbonate de sodium.

5. Procédé selon l'une quelconque des revendications précédentes, caractérisé en ce que l'on réalise le chauffage jusqu'à une température finale supérieure à 110°C, de préférence de 120-130°C.

6. Procédé selon l'une quelconque des revendications précédentes, caractérisé en ce que l'on réalise le chauffage dans une première étape jusqu'à une température d'environ 90°C à pression atmosphérique et dans une seconde étape jusqu'à la température finale choisie avec une pression élevée dans un autoclave.
